# EUROPÄISCHE PATENTSCHRIFT

(11) **EP 1 475 399 B1**
(45) Veröffentlichungstag und Bekanntmachung des Hinweises auf die Patenterteilung: **03.08.2016**
(21) Anmeldenummer: 04100928.3
(22) Anmeldetag: 08.03.2004
(51) Int. Cl.: C08G 18/18, B01J 31/02, C08G 18/42

(54) **Feste uretdiongruppenhaltige Polyurethan-Pulverlackzusammensetzungen bei niedriger Temperatur härtbar**
Solid polyurethane powder coatings compositions containing uretdione groups and curable at low temperature
Compositions solides pour revêtements en poudre de polyuréthane à groupements uretdione et durcissables à basses températures

(30) Priorität: 03.05.2003 DE 10320266
(43) Veröffentlichungstag der Anmeldung: 10.11.2004
(73) Patentinhaber: Evonik Degussa GmbH, 45128 Essen (DE)
(72) Erfinder: Spyrou, Emmanouil, Dr., 46282, Dorsten (DE); Loesch, Holger, 44627, Herne (DE); Wenning, Andreas, Dr., 48301, Nottuln (DE)

(56) Entgegenhaltungen:
- EP-A- 0 351 873
- EP-A- 0 669 353
- EP-A- 0 803 524
- US-A- 4 040 992
- US-A- 5 464 921

## Beschreibung

Die Erfindung betrifft feste uretdiongruppenhaltige Polyurethan-Pulverlack-zusammensetzungen, die bei niedrigen Einbrenntemperaturen aushärten, Verfahren zur Herstellung derartiger Zusammensetzungen sowie deren Verwendung zur Herstellung von Kunststoffen, insbesondere Pulverlackbeschichtungen, die zu hochglänzenden oder matten, licht- und wetterstabilen Lackfilmen vernetzen.

Bei Raumtemperatur feste, extern oder intern blockierte Polyisocyanate stellen wertvolle Vernetzer für thermisch vernetzbare Polyurethan (PUR)-Pulverlackzusammensetzungen dar.

So beschreibt z. B. die DE-OS 27 35 497 PUR-Pulverlacke mit hervorragender Witterungs- und Wärmestäbilität. Die Vernetzer, deren Herstellung in der DE-OS 27 12 931 beschrieben wird, bestehen aus ε-Caprolactam blockiertem Isocyanuratgruppen enthaltendem Isophorondiisocyanat. Es sind auch urethan-, biuret- oder harnstoffgruppenhaltige Polyisocyanate bekannt, deren Isocyanatgruppen ebenfalls blockiert sind.

Der Nachteil dieser extern blockierten Systeme besteht in der Abspaltung des Blockierungsmittels während der thermischen Vernetzungsreaktion. Da das Blockierungsmittel somit in die Umwelt emittieren kann, müssen aus ökologischen und arbeitshygienischen Gründen besondere Vorkehrungen zur Reinigung der Abluft und/oder Wiedergewinnung des Blockierungsmittels getroffen werden. Zudem weisen die Vernetzer eine geringe Reaktivität auf. Es sind Härtungstemperaturen oberhalb von 170 °C erforderlich.

Die DE-OS 30 30 539 und DE-OS 30 30 572 beschreiben Verfahren zur Herstellung von uretdiongruppenhaltigen Polyadditionsverbindungen, deren terminale Isocyanatgruppen mit Monoalkoholen oder Monoaminen irreversibel blockiert sind. Nachteilig sind insbesondere die Ketten abbrechenden Bestandteile der Vernetzer, die zu geringen Netzwerkdichten der PUR-Pulverlackbeschichtungen und damit zu mäßigen Lösemittelbeständigkeiten führen.

Hydroxylgruppenterminierte, uretdiongruppenhaltige Polyadditionsverbindungen sind Gegenstand der EP 669 353. Sie weisen aufgrund ihrer Funktionalität von zwei eine verbesserte Resistenz gegenüber Lösemitteln auf. Den Pulverlackzusammensetzungen auf Basis dieser uretdiongruppenhaltigen Polyisocyanate ist gemeinsam, dass sie bei der Härtungsreaktion keine flüchtigen Verbindungen emittieren. Allerdings liegen die Einbrenntemperaturen mit mindestens 180 °C auf hohem Niveau.

Der Einsatz von Amidinen als Katalysatoren in PUR-Pulverlackzusammensetzung wird in der EP 803 524 beschrieben. Diese Katalysatoren führen zwar zu einer Erniedrigung der Aushärtungstemperatur, zeigen aber eine beträchtliche Vergilbung, die im Beschichtungsbereich allgemein unerwünscht ist. Ursache dieser Vergilbung sind vermutlich die reaktiven Stickstoffatome in den Amidinen. Diese können sich mit Luftsauerstoff zu N-Oxiden umsetzen, die für die Verfärbung verantwortlich sind.

In der EP 803 524 werden auch andere Katalysatoren erwähnt, die bislang für diesen Zweck verwendet wurden, ohne aber eine besondere Wirkung auf die Aushärtetemperatur zu zeigen. Dazu gehören die aus der Polyurethan-Chemie bekannten metallorganischen Katalysatoren, wie z. B. Dibutylzinndilaurat (DBTL), oder aber tertiäre Amine, wie z. B. 1,4-Diazabicylco[2.2.2]octan (DABCO).

In der WO 00/34355 werden Katalysatoren auf der Basis von Metall-acetylacetonaten, z. B. Zinkacetylacetonat, beansprucht. Solche Katalysatoren sind tatsächlich in der Lage, die Aushärtungstemperatur von uretdiongruppenhaltige Polyurethan-Pulverlackzusammen-setzungen zu erniedrigen, zeigen als Reaktionsprodukte aber hauptsächlich Allophanate (M. Gedan-Smolka, F. Lehmann, D. Lehmann "New catalysts for the low temperature curing of uretdione powder coatings" International Waterborne, High solids and Powder Coatings Symposium, New Orleans, 21 - 23. 2. 2001). Allophanate sind die Umsetzungsprodukte aus einem Mol Alkohol und zwei Mol Isocyanat, während sich in der herkömmlichen Urethanchemie ein Mol Alkohol mit einem Mol Isocyanat umsetzt. Durch die unerwünschte Allophanatbildung werden also technisch wie ökonomisch wertvolle Isocyanatgruppen vernichtet.

Aufgabe der vorliegenden Erfindung war es daher, hochreaktive uretdiongruppenhaltige Polyurethan-Pulverlackzusammensetzungen zu finden, die sich bereits bei sehr niedrigen Temperaturen aushärten lassen und sich insbesondere zur Herstellung von Kunststoffen sowie von hochglänzenden oder matten, licht- und wetterstabilen Pulverlackbeschichtungen eignen.

Überraschend wurde gefunden, dass Tetraalkyammoniumcarboxylate die Rückspaltung von Uretdiongruppen so stark beschleunigen, so dass sich bei Verwendung uretdionhaltiger Pulverlackhärter die Aushärtetemperatur von Pulverlackzusammensetzungen beträchtlich erniedrigen lässt.

Gegenstand der vorliegenden Erfindung ist eine hochreaktive Polyurethan-Pulverlackzusammensetzung, enthaltend
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6 - 18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel [NR¹R²R³R⁴]⁺ [R⁵COO]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verbrückt, unter Ausbildung von Cyclen, Bicyclen oder Tricyclen und die Verbrückungsatome neben Kohlenstoff auch Heteroatome sein können, mit 1 - 18 Kohlenstoffatomen bedeuten und jeder Rest R¹ - R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ ein Alkyl-, Aryl-, Aralkyl-, Heteroaryl-, Alkoxyalkylrest, linear oder verzweigt, mit 1 - 18 Kohlenstoffatomen darstellt und zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann,
D) gegebenenfalls mindestens eine gegenüber Säuregruppen reaktive Verbindung mit einem Gewichtsanteil, bezogen auf die Gesamtformulierung, von 0,1 bis 10 %,
E) gegebenenfalls Hilfs- und Zusatzstoffe,
so dass die beiden Komponenten A) und B) in dem Verhältnis vorliegen, dass auf jede Hydroxylgruppe der Komponente B) 0,3 bis 1 Uretdiongruppe der Komponente A) entfällt, der Anteil des Katalysators unter C) 0,001 - 3 Gew.-% an der Gesamtmenge der Komponenten A) und B) beträgt.

Weiterer Gegenstand der Erfindung ist auch ein Verfahren zur Herstellung der Pulverlackzusammensetzungen.

Gegenstand der Erfindung ist auch die Verwendung der erfindungsgemäßen Pulverlackzusammensetzungen zur Herstellung von Pulverlackbeschichtungen auf Metall-, Kunststoff-, Glas-, Holz-, oder Ledersubstraten oder sonstigen hitzeresistenten Untergründen.

Ebenfalls Gegenstand der Erfindung sind Metallbeschichtungszusammensetzungen, insbesondere für Automobilkarossen, Motor- und Fahrräder, Gebäudeteile und Haushaltsgeräte, Holzbeschichtungszusammensetzungen, Glasbeschichtungszusammen-setzungen, Lederbeschichtungszusammensetzungen und Kunststoffbeschichtungs-zusammensetzungen, enthaltend eine Polyurethan-Pulverlackzusammensetzung aus
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6 - 18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel [NR¹R²R³R⁴]⁺ [R⁵COO]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verbrückt, unter Ausbildung von Cyclen, Bicyclen oder Tricyclen und die Verbrückungsatome neben Kohlenstoff auch Heteroatome sein können, mit 1 - 18 Kohlenstoffatomen bedeuten und jeder Rest R¹ - R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ ein Alkyl-, Aryl-, Aralkyl-, Heteroaryl-, Alkoxyalkylrest, linear oder verzweigt, mit 1 - 18 Kohlenstoffatomen darstellt und zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann,
D) gegebenenfalls mindestens eine gegenüber Säuregruppen reaktive Verbindung mit einem Gewichtsanteil, bezogen auf die Gesamtformulierung, von 0,1 bis 10 %,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt.

Uretdiongruppen enthaltende Polyisocyanate sind wohlbekannt und werden beispielsweise in US 4,476,054, US 4,912,210, US 4,929,724 sowie EP 417 603 beschrieben. Ein umfassender Überblick über industriell relevante Verfahren zur Dimerisierung von Isocyanaten zu Uretdionen liefert das J. Prakt. Chem. 336 (1994) 185-200. Im allgemeinen erfolgt die Umsetzung von Isocyanaten zu Uretdionen in Gegenwart löslicher Dimerisierungs-katalysatoren wie z. B. Dialkylaminopyridinen, Trialkylphosphinen, Phosphorigsäure-triamiden oder Imdidazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt. Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden. Grundsätzlich ist zur Herstellung von Uretdiongruppen enthaltenden Polyisocyanaten eine breite Palette von Isocyanaten geeignet. Erfindungsgemäß werden Isophorondiisocyanat (IPDI), Hexamethylendiisocyanat (HDI), 2-Methylpentandiisocyanat (MPDI), 2,2,4-Trimethyl-hexamethylendiisocyanat/2,4,4-Trimethyl-hexamethylendiisocyanat (TMDI), Norbomandiisocyanat (NBDI), Methylendiphenyldiisocyanat (MDI) und Tetramethylxylylendiisocyanat (TMXDI) bevorzugt verwendet. Ganz besonders bevorzugt werden IPDI und HDI.

Die Umsetzung dieser uretdiongruppentragenden Polyisocyanate zu Uretdiongruppen aufweisenden Pulverlackhärtern A) beinhaltet die Reaktion der freien NCO-Gruppen mit hydroxylgruppenhaltigen Monomeren oder Polymeren, wie z. B. Polyestern, Polythioethern, Polyethern, Polycaprolactamen, Polyepoxiden, Polyesteramiden, Polyurethanen oder niedermolekularen Di-, Tri- und/oder Tetraalkoholen als Kettenverlängerer und gegebenenfalls Monoaminen und/oder Monoalkoholen als Kettenabbrecher und wurde schon häufig beschrieben (EP 669 353, EP 669 354, DE 30 30 572, EP 639 598 oder EP 803 524). Bevorzugte Uretdiongruppen aufweisende Pulverlackhärter A) haben einen freien NCO-Gehalt von weniger als 5 Gew.-% und einen Gehalt an Uretdiongruppen von 6 bis 18 Gew.-% (berechnet als C₂N₂O₂, Molekulargewicht 84). Bevorzugt werden Polyester und monomere Dialkohole. Außer den Uretdiongruppen können die Pulverlackhärter auch Isocyanurat-, Biuret-, Allophanat-, Urethan- und/oder Harnstoff-Strukturen aufweisen.

Bei den hydroxylgruppenhaltigen Polymeren B) werden bevorzugt Polyester, Polyether, Polyacrylate, Polyurethane und/oder Polycarbonate mit einer OH-Zahl von 20 - 200 (in mg KOH/Gramm) eingesetzt. Besonders bevorzugt werden Polyester mit einer OH-Zahl von 30 - 150, einem mittleren Molekulargewicht von 500 - 6000 g/mol und einem Schmelzpunkt zwischen 40 und 130 °C verwendet. Solche Bindemittel sind beispielsweise in EP 669 354 und EP 254 152 beschrieben worden. Selbstverständlich können auch Mischungen solcher Polymere eingesetzt werden. Die Menge an den hydroxylgruppenhaltigen Polymeren B) wird so gewählt, dass auf jede Hydroxylgruppe der Komponente B) 0,3 bis 1 Uretdiongruppe der Komponente A) entfällt.

Die erfindungswesentlichen Katalysatoren C) genügen der Formel [NR¹R²R³R⁴]⁺ [R⁵COO]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verbrückt, unter Ausbildung von Cyclen, Bicyclen oder Tricyclen und die Verbrückungsatome neben Kohlenstoff auch Heteroatome sein können, mit 1 - 18 Kohlenstoffatomen bedeuten und jeder Rest R¹ - R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ ein Alkyl-, Aryl-, Aralkyl-, Heteroaryl-, Alkoxyalkylrest, linear oder verzweigt, mit 1 - 18 Kohlenstoffatomen darstellt und zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann. Beispiele für solche Katalysatore sind Tetramethylammoniumformiat, Tetramethylammoniumacetat, Tetramethylammonium-propionat, Tetramethylammonium-butyrat, Tetramethylammoniumbenzoat, Tetraethyl-ammoniumformiat, Tetraethylammoniumacetat, Tetraethylammoniumpropionat, Tetraethyl-ammoniumbutyrat, Tetraethylammonium-benzoat, Tetrapropylammoniumformiat, Tetrapropylammoniumacetat, Tetrapropylammoniumpropionat, Tetrapropylammoniumbutyrat, Tetrapropylammonium-benzoat Tetrabutylammoniumformiat, Tetrabutylammonium-acetat, Tetrabutylammonium-propionat, Tetrabutylammoniumbutyrat, und Tetrabutylammoniumbenzoat. Selbstverständlich können auch Mischungen solcher Katalysatoren verwendet werden. Besonders bevorzugt werden Tetrabutylammoniumbenzoat und Tetrabutylammoniumacetat eingesetzt. Sie sind in einer Menge von 0,001 - 3 Gew.-%, bevorzugt 0,01 - 3 Gew.-%, bezogen auf die Komponenten A) und B) in der Pulverlackzusammensetzung enthalten. Die Katalysatoren können Kristallwasser enthalten, wobei dieses bei der Berechnung der eingesetzten Katalysatorenmenge nicht berücksichtigt wird, d. h. die Wassermenge wird herausgerechnet.
Eine erfindungsgemäße Variante schließt die polymere Anbindung solcher Katalysatoren C) an Pulverlackhärter A) oder hydroxylgruppenhaltige Polymere B) mit ein. So können z. B. freie Alkohol-, Thio- oder Aminogruppen der Ammoniumsalze mit Säure-, Isocyanat-, oder Glycidylgruppen der Pulverlackhärter A) oder hydroxylgruppenhaltige Polymere B) umgesetzt werden, um die Katalysatoren C) in den polymeren Verbund zu integrieren.

Beachtet werden muss in diesem Zusammenhang, dass die Aktivität dieser Katalysatoren in Anwesenheit von Säuren deutlich abnimmt. Zu den herkömmlichen Reaktionspartnern der uretdionhaltiger Pulverlackhärter gehören hydroxylgruppenhaltige Polyester. Aufgrund der Herstellungsweise von Polyestern tragen diese mitunter in geringem Umfang noch Säuregruppen. Der Gehalt der Polyester an Säuregruppen sollte unter 20 mg KOH/g betragen, da sonst die Katalysatoren zu sehr inhibiert werden. In Gegenwart von solchen Säuregruppen tragenden Polyestern bietet es sich an, die erwähnten Katalysatoren entweder im Überschuss bezogen auf die Säuregruppen zu verwenden, oder aber reaktive Verbindungen zuzusetzen, die in der Lage sind, Säuregruppen abzufangen. Sowohl monofunktionelle als auch mehrfachfunktionelle Verbindungen können hierzu eingesetzt werden. Die möglicherweise vernetzende Wirkung der mehrfach funktionellen Verbindungen ist aufgrund der viskositätserhöhenden Wirkung zwar unerwünscht, stört aber in der Regel wegen der geringen Konzentration nicht.

Reaktive säureabfangende Verbindungen D) sind in der Lackchemie allgemein bekannt. So setzen sich beispielsweise Epoxyverbindungen, Carbodiimide, Hydroxyalkylamide oder aber auch 2-Oxazoline mit Säuregruppen bei erhöhten Temperaturen um. In Frage kommen dabei z. B. Triglycidyletherisocyanurat (TGIC), EPIKOTE^{®} 828 (Diglycidylether auf Basis Bisphenol A, Schell), Versaticsäureglycidylester, Ethylhexylglycidylether, Butylglycidylether, Polypox R 16 (Pentaerythrittetraglycidylether, UPPC AG), Vestagon EP HA 320, (Hydroxyalkylamid, Degussa AG), aber auch Phenylenbisoxazolin, 2-Methyl-2-oxazolin, 2-Hydroxyethyl-2-oxazolin, 2-Hydroxypropyl-2-oxazolin und 5-Hydroxypentyl-2-oxazolin. Selbstverständlich kommen auch Mischungen solcher Substanzen in Frage. Diese reaktive Verbindungen können in Gewichtsanteilen von 0,1 bis 10 %, bevorzugt von 0,5 bis 3 %, bezogen auf die Gesamtformulierung eingesetzt werden.

Für die Pulverlackherstellung können die in der Pulverlacktechnologie üblichen Zusatzstoffe E) wie Verlaufsmittel, z. B. Polysilicone oder Acrylate, Lichtschutzmittel z. B. sterisch gehinderte Amine, oder andere Hilfsmittel, wie sie z. B. in EP 669 353 beschrieben wurden, in einer Gesamtmenge von 0,05 bis 5 Gew.-% zugesetzt werden. Füllstoffe und Pigmente wie z. B. Titandioxid können in einer Menge bis zu 50 Gew.-% der Gesamtzusammensetzung zugesetzt werden.

Optional können zusätzliche Katalysatoren, wie sie in der Polyurethanchemie bereits bekannt sind, enthalten sein. Es handelt sich hierbei hauptsächlich um metallorganischen Katalysatoren, wie z. B. Dibutylzinndilaurat, oder aber tertiäre Amine, wie z. B. 1,4-Diazabicylco[2,2,2,]octan, in Mengen von 0,001-1 Gew.-%.

Herkömmliche uretdionhaltige Pulverlackzusammensetzungen lassen sich unter normalen Bedingungen (DBTL-Katalyse) erst ab 180 °C aushärten. Mit Hilfe der erfindungsgemäßen Niedrigtemperatur härtenden Pulverlackzusammensetzungen kann bei maximal 160 °C Aushärtungstemperatur (auch geringere Aushärtungstemperaturen sind durchaus möglich) nicht nur Energie und (Aushärtungs-)Zeit gespart werden, sondern es lassen sich auch viele temperatursensible Substrate beschichten, die bei 180 °C unerwünschte Vergilbungs-, Zersetzungs- und/oder Versprödungserscheinungen zeigen würden. Neben Metall, Glas, Holz, Leder, Kunststoffen und MDF-Platten sind auch bestimmte Aluminiumuntergründe prädestiniert. Bei letzteren führt eine zu hohe Temperaturbelastung mitunter zu einer unerwünschten Änderung der Kristallstruktur.

Die Homogenisierung aller Bestandteile zur Herstellung einer Pulverlackzusammensetzung kann in geeigneten Aggregaten, wie z. B. beheizbaren Knetern, vorzugsweise jedoch durch Extrudieren, erfolgen, wobei Temperaturobergrenzen von 120 bis 130 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z. B. durch elektrostatisches Pulversprühen, Wirbelsintern, oder elektrostatisches Wirbelsintern erfolgen. Nach dem Pulverauftrag werden die beschichteten Werkstücke zur Aushärtung 4 bis 60 Minuten auf eine Temperatur von 120 bis 220 °C, vorzugsweise 6 bis 30 Minuten bei 120 bis 180 °C erhitzt.

Nachfolgend wird der Gegenstand der Erfindung anhand von Beispielen näher erläutert.

### Beispiele:

| **Einsatzstoffe** | **Produktbeschreibung, Hersteller** |
|---|---|
| VESTAGON BF 1320 | Pulverlackhärter, Degussa AG, Coatings & Colorants, Uretdion-Gehalt: 13,8 %, Schmp.: 99-112 °C, T_{G}: 87 °C |
| CRYLCOAT 240 | OH-Polyester, OH-Zahl: 24,5; SZ: 3,3; UCB |
| ARALDIT PT 810 | Triglycidyletherisocyanurat (TGIC), Vantico |
| KRONOS 2160 | Titandioxid, Kronos |
| RESIFLOW PV 88 | Verlaufsmittel, Worlee |
| TBAB | Tetrabutylammoniumbenzoat, Aldrich |
| DBTL | Dibutylzinndilaurat, Crompton Vinyl Additives GmbH |

| | |
|---|---|
| OH-Zahl: Verbrauch mg KOH/g Polymer; SZ: Säurezahl, Verbrauch mg KOH/g Polymer Schmp.: Schmelzpunkt; T_{G}: Glasübergangspunkt; WG: Wassergehalt in Gew.-% | |

### Allgemeine Herstellungsvorschrift für die Pulverlacke:

Die zerkleinerten Einsatzstoffe - Pulverlackhärter, hydroxyfunktionelle Polymere, Katalysatoren, Säurefänger, Verlaufsmittel - werden in einem Kollergang innig vermischt und anschließend im Extruder bis maximal 130 °C homogenisiert. Nach dem Erkalten wird das Extrudat gebrochen und mit einer Stiftsmühle auf eine Korngröße < 100 µm gemahlen. Das so hergestellte Pulver wird mit einer elektrostatischen Pulverspritzanlage bei 60 KV auf entfettete Eisenbleche appliziert und in einem Umlufttrockenschrank eingebrannt.

Pulverlack-Zusammensetzungen (Angaben in Gew.-%, außer bei OH/UD):

| **Beispiele** | **VESTAGON** | **CRYLCOAT 240** | **TBAB** | **DBTL** | **OH/UD** |
|---|---|---|---|---|---|
| | **BF 1320** | | | | |
| 1 | 11,37 | 45,52 | 0,61 | | 1,00 : 0,75 |
| 2 | 14,18 | 42,56 | 0,76 | | 1,00 : 1,00 |
| V1* | 10,53 | 46,51 | | 0,46 | 1,00 :0,75 |
| V2* | 13,17 | 43,75 | | 0,58 | 1,00 : 1,00 |

| | | | | | |
|---|---|---|---|---|---|
| * nicht erfindungsgemäße Vergleichsbeispiele | | | | | |

### OH/UD: Verhältnis OH-Gruppen zu Uretdiongruppen (Mol:Mol)

Zusätzlich wurden in jeder der Formulierungen 40,0 Gew.-% KRONOS 2160, 1,0 Gew.-% RESIFLOW PV 88 und 1,5 Gew.-% ARALDIT PT 810 eingesetzt.

Ergebnisse der Aushärtung nach 30 min bei 160 °C:

| **Beispiele** | **Erichsentiefung [mm]** | **Kugelschlag direkt [inch • lb]** | **Bemerkung** |
|---|---|---|---|
| 1 | > 11,0 | >80 | ausgehärtet |
| 2 | > 10,0 | 160 | ausgehärtet |
| V1* | 0,5 | 30 | nicht ausgehärtet |
| V2* | 0,5 | 20 | nicht ausgehärtet |

| | | | |
|---|---|---|---|
| Erichsentiefung nach DIN 53 156 Kugelschlag nach ASTM D 2794-93 | | | |

## Patentansprüche

1. Hochreaktive Polyurethan-Pulverlackzusammensetzung enthaltend
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6 - 18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel [NR¹R²R³R⁴]⁺ [R⁵COO]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verbrückt, unter Ausbildung von Cyclen, Bicyclen oder Tricyclen und die Verbrückungsatome neben Kohlenstoff auch Heteroatome sein können, mit 1 - 18 Kohlenstoffatomen bedeuten und jeder Rest R¹ - R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ ein Alkyl-, Aryl-, Aralkyl-, Heteroaryl-, Alkoxyalkylrest, linear oder verzweigt, mit 1 - 18 Kohlenstoffatomen darstellt und zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt.

2. Polyurethan-Pulverlackzusammensetzung gemäß Anspruch 1,
**dadurch gekennzeichnet,**
**dass** mindestens eine gegenüber Säuregruppen reaktive Verbindung mit einem Gewichtsanteil, bezogen auf die Gesamtformulierung, von 0,1 bis 10 % enthalten ist.

3. Polyurethan-Pulverlackzusammensetzung nach Anspruch 1 oder 2,
**dadurch gekennzeichnet,**
**dass** Hilfs- und Zusatzstoffe E) enthalten sind.

4. Polyurethan-Pulverlackzusammensetzungen nach mindestens einem der Ansprüche 1 bis 3,
**dadurch gekennzeichnet,**
**dass** uretdionhaltige Pulverlackhärter A) auf Basis von Isophorondiisocyanat (IPDI), Hexamethylendiisocyanat (HDI), 2-Methylpentadiisocyanat (MPDI), 2,2,4-Trimethylhexamethylendiisocyanat/2,4,4-Trimethyl-hexamethylendiisocyanat (TMDI), Norbornandiisocyanat (NBDI), Methylendiphenyldiisocyanat (MDI) und Tetramethylxylylendiisocyanat (TMXDI), allein oder in Mischungen, enthalten sind.

5. Polyurethan-Pulverlackzusammensetzungen nach Anspruch 4,
**dadurch gekennzeichnet,**
**dass** uretdionhaltige Pulverlackhärter auf Basis von IPDI und/oder HDI enthalten sind.

6. Polyurethan-Pulverlackzusammensetzungen nach mindestens einem der Ansprüche 1 bis 5,
**dadurch gekennzeichnet,**
**dass** uretdionhaltige Pulverlackverhärter A) auf Basis hydroxylgruppenhaltiger Polyester, Polythioether, Polyether, Polycaprolactame, Polyepoxide, Polyesteramide, Polyurethane, niedermolekulare Di-, Tri- und/oder Tetraalkohole, Monoamine und/oder Monoalkohole, allein oder in Mischungen, enthalten sind.

7. Polyurethan-Pulverlackzusammensetzungen nach Anspruch 6,
**dadurch gekennzeichnet,**
**dass** Polyester und/oder monomere Dialkohole enthalten sind.

8. Polyurethan-Pulverlackzusammensetzungen nach mindestens einem der Ansprüche 1 bis 7,
**dadurch gekennzeichnet,**
**dass** als hydroxylgruppenhaltige Polymere B) Polyester, Polyether, Polyacrylate,
Polyurethane und Polycarbonate, allein oder in Mischungen, enthalten sind.

9. Polyurethan-Pulverlackzusammensetzungen nach Anspruch 8,
**dadurch gekennzeichnet,**
**dass** Polyester mit einer OH-Zahl von 30 bis 150 mg KOH/g, einem mittleren Molekulargewicht von 500 bis 6000 g/mol und einem Schmelzpunkt zwischen 40 und 130 °C, enthalten sind.

10. Polyurethan-Pulverlackzusammensetzungen nach mindestens einem der Ansprüche 1 bis 9,
**dadurch gekennzeichnet,**
**dass** Katalysatoren C), ausgewählt aus Tetramethylammoniumformiat, Tetramethylammoniumacetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat Tetrabutylammoniumformiat, Tetrabutylammoniumacetat, Tetrabutylammoniumpropionat, Tetrabutylammoniumbutyrat, Tetrabutylammoniumbenzoat eingesetzt werden, allein oder in Mischungen, enthalten sind.

11. Polyurethan-Pulverlackzusammensetzungen nach mindestens einem der Ansprüche 1 bis 10,
**dadurch gekennzeichnet,**
**dass** als Komponente D) Epoxyverbindungen, Carbodiimide, Hydroxyalkylamide und/oder 2-Oxazoline, enthalten sind.

12. Polyurethan-Pulverlackzusammensetzungen nach Anspruch 11,
**dadurch gekennzeichnet,**
**dass** Versaticsäureglycidylester, Triglycidyletherisocyanurat, EPIKOTE^{®} 828, Vestagon EP HA 320, Phenylenbisoxazolin, 2-Methyl-2-oxazolin-2-Hydroxyethyl-2-oxazolin, 2-Hydroxypropyl-2-oxazolin und/oder 5-Hydroxypentyl-2-oxazolin, allein oder in Mischungen, enthalten sind.

13. Polyurethan-Pulverlackzusammensetzungen nach mindestens einem der Ansprüche 1 bis 12,
**dadurch gekennzeichnet,**
**dass** als Hilfs- und Zusatzstoffe E) Verlaufsmittel, Lichtschutzmittel, Füllstoff, zusätzliche Katalysatoren und/oder Pigmente enthalten sind.

14. Verfahren zur Herstellung von hochreaktiven Polyurethan-Pulverlackzusammensetzungen, enthaltend
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6 - 18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel [NR¹R²R³R⁴]⁺ [R⁵COO]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verbrückt, unter Ausbildung von Cyclen, Bicyclen oder Tricyclen und die Verbrückungsatome neben Kohlenstoff auch Heteroatome sein können, mit 1 - 18 Kohlenstoffatomen bedeuten und jeder Rest R¹ - R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ ein Alkyl-, Aryl-, Aralkyl-, Heteroaryl-, Alkoxyalkylrest, linear oder verzweigt, mit 1 - 18 Kohlenstoffatomen darstellt und zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann,
D) gegebenenfalls mindestens eine gegenüber Säuregruppen reaktive Verbindung mit einem Gewichtsanteil, bezogen auf die Gesamtformulierung, von 0,1 bis 10 %,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt, in beheizbaren Aggregaten bei einer Temperaturobergrenze von 120 bis 130 °C.

15. Verwendung von
A) mindestens einem uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6 - 18 Gew.-%,
B) mindestens einem hydroxylgruppenhaltigen Polymer mit einem Schmelzpunkt von 40 bis 130 °C und einer OH-Zahl zwischen 20 und 200 mg KOH / Gramm,
C) mindestens einen Katalysator der Formel [NR¹R²R³R⁴]⁺ [R⁵COO]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verrückt, unter Ausbildung von Cyclen, Bicyclen oder Tricyclen und die Verbrückungsatome neben Kohlenstoff auch Heteroatome sein können, mit 1 - 18 Kohlenstoffatomen bedeuten und jeder Rest R¹ - R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ ein Alkyl-, Aryl-, Aralkyl-, Heteroaryl-, Alkoxyalkylrest, linear oder verzweigt, mit 1 - 18 Kohlenstoffatomen darstellt und zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann,
D) gegebenenfalls mindestens eine gegenüber Säuregruppen reaktive Verbindung mit einem Gewichtsanteil, bezogen auf die Gesamtformulierung, von 0,1 bis 10 %,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt, zur Herstellung von Pulverlackbeschichtungen.

16. Verwendung nach Anspruch 15,
**dadurch gekennzeichnet,**
**dass** Ausgangsverbindungen nach mindestens einem der Ansprüche 2 bis 13 enthalten sind.

17. Verwendung nach Anspruch 15 - 16 zur Herstellung von Pulverlackbeschichtungen auf Metall-, Kunststoff-, Holz-, Glas-, Leder- oder sonstigen hitzeresistenten Untergründen.

18. Metallbeschichtungszusammensetzungen, enthaltend eine Polyurethan-Pulverlackzusammensetzung aus
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6 - 18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel [NR¹R²R³R⁴]⁺ [R⁵COO]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verbrückt, unter Ausbildung von Cyclen, Bicyclen oder Tricyclen und die Verbrückungsatome neben Kohlenstoff auch Heteroatome sein können, mit 1 - 18 Kohlenstoffatomen bedeuten und jeder Rest R¹ - R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ ein Alkyl-, Aryl-, Aralkyl-, Heteroaryl-, Alkoxyalkylrest, linear oder verzweigt, mit 1 - 18 Kohlenstoffatomen darstellt und zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann,
D) gegebenenfalls mindestens eine gegenüber Säuregruppen reaktive Verbindung mit einem Gewichtsanteil, bezogen auf die Gesamtformulierung, von 0,1 bis 10 %,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt.

19. Holzbeschichtungszusammensetzung, enthaltend eine Polyurethan-Pulverlackzusammensetzung aus
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6 - 18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel [NR¹R²R³R⁴]⁺ [R⁵COO]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verbrückt, unter Ausbildung von Cyclen, Bicyclen oder Tricyclen und die Verbrückungsatome neben Kohlenstoff auch Heteroatome sein können, mit 1 - 18 Kohlenstoffatomen bedeuten und jeder Rest R¹ - R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ ein Alkyl-, Aryl-, Aralkyl-, Heteroaryl-, Alkoxyalkylrest, linear oder verzweigt, mit 1 - 18 Kohlenstoffatomen darstellt und zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann,
D) gegebenenfalls mindestens eine gegenüber Säuregruppen reaktive Verbindung mit einem Gewichtsanteil, bezogen auf die Gesamtformulierung, von 0,1 bis 10 %,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt.

20. Lederbeschichtungszusammensetzungen, enthaltend eine Polyurethan-Pulverlackzusammensetzung aus
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6 - 18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel [NR¹R²R³R⁴]⁺ [R⁵COO]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verbrückt, unter Ausbildung von Cyclen, Bicyclen oder Tricyclen und die Verbrückungsatome neben Kohlenstoff auch Heteroatome sein können, mit 1 - 18 Kohlenstoffatomen bedeuten und jeder Rest R¹ - R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ ein Alkyl-, Aryl-, Aralkyl-, Heteroaryl-, Alkoxyalkylrest, linear oder verzweigt, mit 1 - 18 Kohlenstoffatomen darstellt und zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann,
D) gegebenenfalls mindestens eine gegenüber Säuregruppen reaktive Verbindung mit einem Gewichtsanteil, bezogen auf die Gesamtformulierung, von 0,1 bis 10 %,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt.

21. Kunststoffbeschichtungszusammensetzungen, enthaltend eine Polyurethan-Pulverlackzusammensetzung aus
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6 - 18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel [NR¹R²R³R⁴]⁺ [R⁵COO]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verbrückt, unter Ausbildung von Cyclen, Bicyclen oder Tricyclen und die Verbrückungsatome neben Kohlenstoff auch Heteroatome sein können, mit 1 - 18 Kohlenstoffatomen bedeuten und jeder Rest R¹ - R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ ein Alkyl-, Aryl-, Aralkyl-, Heteroaryl-, Alkoxyalkylrest, linear oder verzweigt, mit 1 - 18 Kohlenstoffatomen darstellt und zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann,
D) gegebenenfalls mindestens eine gegenüber Säuren reaktive Verbindung mit einem Gewichtsanteil, bezogen auf die Gesamtformulierung, von 0,1 bis 10 %,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt.

22. Metallbeschichtung nach Anspruch 18 für Automobilkarossen, Motor- und Fahrräder, Gebäudeteile und Haushaltsgeräte.

23. Beschichtungszusammensetzungen nach einem der Ansprüche 18 bis 22,
**dadurch gekennzeichnet,**
**dass** Hilfs- und Zusatzstoffe E) enthalten sind.

24. Beschichtungszusammensetzungen nach einem der Ansprüche 18 bis 23,
**dadurch gekennzeichnet,**
**dass** diese Verbindungen nach mindestens einem der Ansprüche 2 bis 14 enthalten.

## Claims

1. Highly reactive polyurethane powder coating composition containing
A) at least one uretdione-containing powder coating hardener, based on aliphatic, (cyclo)aliphatic or cycloaliphatic polyisocyanates and hydroxyl-containing compounds, having a melting point of from 40 to 130°C, a free NCO content of less than 5% by weight, and a uretdione content of 6 - 18% by weight,
B) at least one hydroxyl-containing polymer having a melting point of from 40 to 130°C and an OH number of between 20 and 200 mg KOH/gram,
C) at least one catalyst of the formula [NR¹R²R³R⁴]⁺ [R⁺COO]⁻, where R¹ - R⁴ simultaneously or independently of one another are alkyl, aryl, aralkyl, heteroaryl or alkoxylalkyl radicals having 1 - 18 carbon atoms, in each case linear or branched, unbridged or bridged with other radicals R¹ - R⁴, to form monocyclic, bicyclic or tricyclic systems, it being possible for the bridging atoms to include not only carbon but also heteroatoms and, additionally, for each radical R¹ - R⁴ to have one or more alcohol, amino, ester, keto, thio, urethane, urea or allophanate groups, double bonds, triple bonds or halogen atoms, and R⁵ is an alkyl, aryl, aralkyl, heteroaryl or alkoxyalkyl radical having 1 - 18 carbon atoms which is linear or branched and additionally may have one or more alcohol, amino, ester, keto, thio, urethane, urea or allophanate groups, double bonds, triple bonds or halogen atoms,
so that the ratio of the two components A) and B) is such that for each hydroxyl group of component B) there is from 0.3 to 1 uretdione group of component A), and the fraction of the catalyst C) is 0.001 - 3% by weight of the total amount of components A) and B).

2. Polyurethane powder coating composition according to Claim 1, **characterized in that** at least one compound which is reactive toward acid groups is present with a weight fraction, based on the total formulation, of from 0.1 to 10%.

3. Polyurethane powder coating composition according to Claim 1 or 2, **characterized in that** auxiliaries and additives E) are present.

4. Polyurethane powder coating compositions according to at least one of Claims 1 to 3, **characterized in that** uretdione-containing powder coating hardeners A) based on isophorone diisocyanate (IPDI), hexamethylene diisocyanate (HDI), 2-methylpenta diisocyanate (MPDI), 2,2,4-trimethylhexamethylene diisocyanate/2,4,4-trimethylhexamethylene diisocyanate (TMDI), norbornane diisocyanate (NBDI), methylenediphenyl diisocyanate (MDI) and tetramethylxylylene diisocyanate (TMXDI), alone or in mixtures, are present.

5. Polyurethane powder coating compositions according to Claim 4, **characterized in that** uretdione-containing powder coating hardeners based on IPDI and/or HDI are present.

6. Polyurethane powder coating compositions according to at least one of Claims 1 to 5, **characterized in that** uretdione-containing powder coating hardeners A) based on hydroxyl-containing polyesters, polythioethers, polyethers, polycaprolactams, polyepoxides, polyesteramides, polyurethanes, low molecular mass di-, tri- and/or tetraalcohols, monoamines and/or monoalcohols, alone or in mixtures, are present.

7. Polyurethane powder coating compositions according to Claim 6, **characterized in that** polyesters and/or monomeric dialcohols are present.

8. Polyurethane powder coating compositions according to at least one of Claims 1 to 7, **characterized in that** hydroxyl-containing polymers B) present are polyesters, polyethers, polyacrylates, polyurethanes and polycarbonates, alone or in mixtures.

9. Polyurethane powder coating compositions according to Claim 8, **characterized in that** polyesters having an OH number of 30 to 150 mg KOH/g, an average molecular weight of 500 to 6000 g/mol and a melting point of between 40 and 130°C are present.

10. Polyurethane powder coating compositions according to at least one of Claims 1 to 9, **characterized in that** catalysts C) selected from tetramethylammonium formate, tetramethylammonium acetate, tetramethylammonium propionate, tetramethylammonium butyrate, tetramethylammonium benzoate, tetraethylammonium formate, tetraethylammonium acetate, tetraethylammonium propionate, tetraethylammonium butyrate, tetraethylammonium benzoate, tetrapropylammonium formate, tetrapropylammonium acetate, tetrapropylammonium propionate, tetrapropylammonium butyrate, tetrapropylammonium benzoate, tetrabutylammonium formate, tetrabutylammonium acetate, tetrabutylammonium propionate, tetrabutylammonium butyrate and tetrabutylammonium benzoate are used, alone or in mixtures, are present.

11. Polyurethane powder coating compositions according to at least one of Claims 1 to 10, **characterized in that** epoxy compounds, carbodiimides, hydroxylalkylamides and/or 2-oxazolines are present as component D).

12. Polyurethane powder coating compositions according to Claim 11, **characterized in that** Versatic acid glycidyl esters, triglycidyl ether isocyanurate, EPIKOTE^{®} 828, Vestagon EP HA 320, phenylenebisoxazoline, 2-methyl-2-oxazoline, 2-hydroxyethyl-2-oxazoline, 2-hydroxypropyl-2-oxazoline and/or 5-hydroxypentyl-2-oxazoline, alone or in mixtures, are present.

13. Polyurethane powder coating compositions according to at least one of Claims 1 to 12,
**characterized in that** leveling agents, light stabilizers, fillers, additional catalysts and/or pigments are present as auxiliaries and additives E).

14. Process for preparing highly reactive polyurethane powder coating compositions containing
A) at least one uretdione-containing powder coating hardener, based on aliphatic, (cyclo)aliphatic or cycloaliphatic polyisocyanates and hydroxyl-containing compounds, having a melting point of from 40 to 130°C, a free NCO content of less than 5% by weight, and a uretdione content of 6 - 18% by weight,
B) at least one hydroxyl-containing polymer having a melting point of from 40 to 130°C and an OH number of between 20 and 200 mg KOH/gram,
C) at least one catalyst of the formula [NR¹R²R³R⁴]⁺ [R⁺COO]⁻, where R¹ - R⁴ simultaneously or independently of one another are alkyl, aryl, aralkyl, heteroaryl or alkoxylalkyl radicals having 1 - 18 carbon atoms, in each case linear or branched, unbridged or bridged with other radicals R¹ - R⁴, to form monocyclic, bicyclic or tricyclic systems, it being possible for the bridging atoms to include not only carbon but also heteroatoms and, additionally, for each radical R¹ - R⁴ to have one or more alcohol, amino, ester, keto, thio, urethane, urea or allophanate groups, double bonds, triple bonds or halogen atoms, and R⁵ is an alkyl, aryl, aralkyl, heteroaryl or alkoxyalkyl radical having 1 - 18 carbon atoms which is linear or branched and additionally may have one or more alcohol, amino, ester, keto, thio, urethane, urea or allophanate groups, double bonds, triple bonds or halogen atoms,
D) if desired, at least one compound which is reactive toward acid groups and whose weight fraction, based on the total formulation, is from 0.1 to 10%,
so that the ratio of the two components A) and B) is such that for each hydroxyl group of component B) there is from 0.3 to 1 uretdione group of component A), and the fraction of the catalyst C) is 0.001 - 3% by weight of the total amount of components A) and B), in heatable apparatus, with an upper temperature limit of 120 to 130°C.

15. Use of
A) at least one uretdione-containing powder coating hardener, based on aliphatic, (cyclo)aliphatic or cycloaliphatic polyisocyanates and hydroxyl-containing compounds, having a melting point of from 40 to 130°C, a free NCO content of less than 5% by weight, and a uretdione content of 6 - 18% by weight,
B) at least one hydroxyl-containing polymer having a melting point of from 40 to 130°C and an OH number of between 20 and 200 mg KOH/gram,
C) at least one catalyst of the formula [NR¹R²R³R⁴]⁺ [R⁺COO]⁻, where R¹ - R⁴ simultaneously or independently of one another are alkyl, aryl, aralkyl, heteroaryl or alkoxylalkyl radicals having 1 - 18 carbon atoms, in each case linear or branched, unbridged or bridged with other radicals R¹ - R⁴, to form monocyclic, bicyclic or tricyclic systems, it being possible for the bridging atoms to include not only carbon but also heteroatoms and, additionally, for each radical R¹ - R⁴ to have one or more alcohol, amino, ester, keto, thio, urethane, urea or allophanate groups, double bonds, triple bonds or halogen atoms, and R⁵ is an alkyl, aryl, aralkyl, heteroaryl or alkoxyalkyl radical having 1 - 18 carbon atoms which is linear or branched and additionally may have one or more alcohol, amino, ester, keto, thio, urethane, urea or allophanate groups, double bonds, triple bonds or halogen atoms,
D) if desired, at least one compound which is reactive toward acid groups and whose weight fraction, based on the total formulation, is from 0.1 to 10%,
so that the ratio of the two components A) and B) is such that for each hydroxyl group of component B) there is from 0.3 to 1 uretdione group of component A), and the fraction of the catalyst C) is 0.001 - 3% by weight of the total amount of components A) and B), for producing powder coatings.

16. Use according to Claim 15, **characterized in that** starting compounds as set forth in at least one of Claims 2 to 13 are present.

17. Use according to Claim 15 - 16 for producing powder coatings on metal, plastic, wood, glass, leather or other heat-resistant substrates.

18. Metal-coating compositions, containing a polyurethane powder coating composition comprising
A) at least one uretdione-containing powder coating hardener, based on aliphatic, (cyclo)aliphatic or cycloaliphatic polyisocyanates and hydroxyl-containing compounds, having a melting point of from 40 to 130°C, a free NCO content of less than 5% by weight, and a uretdione content of 6 - 18% by weight,
B) at least one hydroxyl-containing polymer having a melting point of from 40 to 130°C and an OH number of between 20 and 200 mg KOH/gram,
C) at least one catalyst of the formula [NR¹R²R³R⁴]⁺ [R⁺COO]⁻, where R¹ - R⁴ simultaneously or independently of one another are alkyl, aryl, aralkyl, heteroaryl or alkoxylalkyl radicals having 1 - 18 carbon atoms, in each case linear or branched, unbridged or bridged with other radicals R¹ - R⁴, to form monocyclic, bicyclic or tricyclic systems, it being possible for the bridging atoms to include not only carbon but also heteroatoms and, additionally, for each radical R¹ - R⁴ to have one or more alcohol, amino, ester, keto, thio, urethane, urea or allophanate groups, double bonds, triple bonds or halogen atoms, and R⁵ is an alkyl, aryl, aralkyl, heteroaryl or alkoxyalkyl radical having 1 - 18 carbon atoms which is linear or branched and additionally may have one or more alcohol, amino, ester, keto, thio, urethane, urea or allophanate groups, double bonds, triple bonds or halogen atoms,
D) if desired, at least one compound which is reactive toward acid groups and whose weight fraction, based on the total formulation, is from 0.1 to 10%,
so that the ratio of the two components A) and B) is such that for each hydroxyl group of component B) there is from 0.3 to 1 uretdione group of component A), and the fraction of the catalyst C) is 0.001 - 3% by weight of the total amount of components A) and B).

19. Wood-coating composition, containing a polyurethane powder coating composition comprising
A) at least one uretdione-containing powder coating hardener, based on aliphatic, (cyclo)aliphatic or cycloaliphatic polyisocyanates and hydroxyl-containing compounds, having a melting point of from 40 to 130°C, a free NCO content of less than 5% by weight, and a uretdione content of 6 - 18% by weight,
B) at least one hydroxyl-containing polymer having a melting point of from 40 to 130°C and an OH number of between 20 and 200 mg KOH/gram,
C) at least one catalyst of the formula [NR¹R²R³R⁴]⁺ [R⁺COO]⁻, where R¹ - R⁴ simultaneously or independently of one another are alkyl, aryl, aralkyl, heteroaryl or alkoxylalkyl radicals having 1 - 18 carbon atoms, in each case linear or branched, unbridged or bridged with other radicals R¹ - R⁴, to form monocyclic, bicyclic or tricyclic systems, it being possible for the bridging atoms to include not only carbon but also heteroatoms and, additionally, for each radical R¹ - R⁴ to have one or more alcohol, amino, ester, keto, thio, urethane, urea or allophanate groups, double bonds, triple bonds or halogen atoms, and R⁵ is an alkyl, aryl, aralkyl, heteroaryl or alkoxyalkyl radical having 1 - 18 carbon atoms which is linear or branched and additionally may have one or more alcohol, amino, ester, keto, thio, urethane, urea or allophanate groups, double bonds, triple bonds or halogen atoms,
D) if desired, at least one compound which is reactive toward acid groups and whose weight fraction, based on the total formulation, is from 0.1 to 10%,
so that the ratio of the two components A) and B) is such that for each hydroxyl group of component B) there is from 0.3 to 1 uretdione group of component A), and the fraction of the catalyst C) is 0.001 - 3% by weight of the total amount of components A) and B).

20. Leather-coating compositions, containing a polyurethane powder coating composition comprising
A) at least one uretdione-containing powder coating hardener, based on aliphatic, (cyclo)aliphatic or cycloaliphatic polyisocyanates and hydroxyl-containing compounds, having a melting point of from 40 to 130°C, a free NCO content of less than 5% by weight, and a uretdione content of 6 - 18% by weight,
B) at least one hydroxyl-containing polymer having a melting point of from 40 to 130°C and an OH number of between 20 and 200 mg KOH/gram,
C) at least one catalyst of the formula [NR¹R²R³R⁴]⁺ [R⁺COO]⁻, where R¹ - R⁴ simultaneously or independently of one another are alkyl, aryl, aralkyl, heteroaryl or alkoxylalkyl radicals having 1 - 18 carbon atoms, in each case linear or branched, unbridged or bridged with other radicals R¹ - R⁴, to form monocyclic, bicyclic or tricyclic systems, it being possible for the bridging atoms to include not only carbon but also heteroatoms and, additionally, for each radical R¹ - R⁴ to have one or more alcohol, amino, ester, keto, thio, urethane, urea or allophanate groups, double bonds, triple bonds or halogen atoms, and R⁵ is an alkyl, aryl, aralkyl, heteroaryl or alkoxyalkyl radical having 1 - 18 carbon atoms which is linear or branched and additionally may have one or more alcohol, amino, ester, keto, thio, urethane, urea or allophanate groups, double bonds, triple bonds or halogen atoms,
D) if desired, at least one compound which is reactive toward acid groups and whose weight fraction, based on the total formulation, is from 0.1 to 10%,
so that the ratio of the two components A) and B) is such that for each hydroxyl group of component B) there is from 0.3 to 1 uretdione group of component A), and the fraction of the catalyst C) is from 0.001 - 3% by weight of the total amount of components A) and B).

21. Plastics-coating compositions, containing a polyurethane powder coating composition comprising
A) at least one uretdione-containing powder coating hardener, based on aliphatic, (cyclo)aliphatic or cycloaliphatic polyisocyanates and hydroxyl-containing compounds, having a melting point of from 40 to 130°C, a free NCO content of less than 5% by weight, and a uretdione content of 6 - 18% by weight,
B) at least one hydroxyl-containing polymer having a melting point of from 40 to 130°C and an OH number of between 20 and 200 mg KOH/gram,
C) at least one catalyst of the formula [NR¹R²R³R⁴]⁺ [R⁺COO]⁻, where R¹ - R⁴ simultaneously or independently of one another are alkyl, aryl, aralkyl, heteroaryl or alkoxylalkyl radicals having 1 - 18 carbon atoms, in each case linear or branched, unbridged or bridged with other radicals R¹ - R⁴, to form monocyclic, bicyclic or tricyclic systems, it being possible for the bridging atoms to include not only carbon but also heteroatoms and, additionally, for each radical R¹ - R⁴ to have one or more alcohol, amino, ester, keto, thio, urethane, urea or allophanate groups, double bonds, triple bonds or halogen atoms, and R⁵ is an alkyl, aryl, aralkyl, heteroaryl or alkoxyalkyl radical having 1 - 18 carbon atoms which is linear or branched and additionally may have one or more alcohol, amino, ester, keto, thio, urethane, urea or allophanate groups, double bonds, triple bonds or halogen atoms,
D) if desired, at least one compound which is reactive toward acids and whose weight fraction, based on the total formulation, is from 0.1 to 10%,
so that the ratio of the two components A) and B) is such that for each hydroxyl group of component B) there is from 0.3 to 1 uretdione group of component A), and the fraction of the catalyst C) is from 0.001 - 3% by weight of the total amount of components A) and B).

22. Metal coating as set forth in Claim 18 for automobile bodies, cycles and motorcycles, architectural components, and household appliances.

23. Coating compositions according to any one of Claims 18 to 22, **characterized in that** auxiliaries and additives E) are present.

24. Coating compositions according to any one of Claims 18 to 23, **characterized in that** they comprise compounds as set forth in at least one of Claims 2 to 14.

## Revendications

1. Composition de peinture en poudre polyuréthane hautement réactive, contenant
A) au moins un durcisseur de peinture en poudre, contenant des groupes urétdione, à base de polyisocyanates aliphatiques, (cyclo)aliphatiques ou cycloaliphatiques et de composés contenant des groupes hydroxy, ayant un point de fusion de 40 à 130 °C, une teneur en groupes NCO libres inférieure à 5 % en poids et une teneur en groupes urétdione de 6 à 18 % en poids,
B) au moins un polymère contenant des groupes hydroxy, ayant un point de fusion de 40 à 130 °C et un indice de groupes OH compris entre 20 et 200 mg de KOH/gramme,
C) au moins un catalyseur de formule [NR¹R²R³R⁴]⁺[R⁵COO]⁻, R¹ à R⁴ représentant, simultanément ou indépendamment les uns des autres, des radicaux alkyle, aryle, aralkyle, hétéroaryle, alcoxyalkyle ayant de 1 à 18 atomes de carbone, chacun linéaire ou ramifié, non ponté ou ponté par d'autres radicaux R¹ à R⁴, avec formation de cycles, bicycles ou tricycles et les atomes qui forment un pont pouvant être, outre des atomes de carbone, également des hétéroatomes et chaque radical R¹ à R⁴ pouvant en outre comporter encore un ou plusieurs groupes alcool, amino, ester, céto, thio, uréthane, urée, allophanate, une ou plusieurs doubles liaisons, triples liaisons ou un ou plusieurs atomes d'halogène, et R⁵ représentant un radical alkyle, aryle, aralkyle, hétéroaryle, alcoxyalkyle, linéaire ou ramifié, ayant de 1 à 18 atomes de carbone et pouvant en outre comporter encore un ou plusieurs groupes alcool, amino, ester, céto, thio, uréthane, urée, allophanate, une ou plusieurs doubles liaisons, triples liaisons ou un ou plusieurs atomes d'halogène,
de sorte que les deux composants A) et B) sont présents en le rapport tel qu'à chaque groupe hydroxy du composant B) correspond 0,3 à 1 groupe urétdione du composant A), et la proportion du catalyseur en C) vaut de 0,001 à 3 % en poids de la quantité totale des composants A) et B).

2. Composition de peinture en poudre polyuréthane selon la revendication 1,
**caractérisée en ce**
**qu'**au moins un composé réactif vis-à-vis de groupes acides est contenu en une proportion pondérale, par rapport à la composition totale, de 0,1 à 10 %.

3. Composition de peinture en poudre polyuréthane selon la revendication 1 ou 2,
**caractérisée en ce que**
des adjuvants et additifs E) sont contenus.

4. Compositions de peintures en poudre polyuréthane selon au moins l'une des revendications 1 à 3,
**caractérisées en ce que**
sont contenus des durcisseurs de peinture en poudre A) contenant des groupes urétdione, à base d'isophorone-diisocyanate (IPDI), d'hexaméthylène-diisocyanate (HDI), de 2-méthylpentadiisocyanate (MPDI), de 2,2,4-trimethylhexaméthylène-diisocyanate/2,4,4-triméthyl-hexaméthylène-diisocyanate (TMDI), de norbornane-diisocyanate (NBDI), de méthylènediphényldiisocyanate (MDI) et de tétraméthylxylylène-diisocyanate (TMXDI), seuls ou en mélanges.

5. Compositions de peintures en poudre polyuréthane selon la revendication 4,
**caractérisées en ce que**
sont contenus des durcisseurs de peintures en poudre contenant des groupes urétdione, à base d'IPDI et/ou de HDI.

6. Compositions de peintures en poudre polyuréthane selon au moins l'une des revendications 1 à 5,
**caractérisées en ce que**
sont contenus des durcisseurs de peinture en poudre A) contenant des groupes urétdione, à base de polyesters contenant des groupes hydroxy, de polythioéthers, polyéthers, polycaprolactames, polyépoxydes, polyesteramides, polyuréthanes, de di-, tri- et/ou tétraalcools de faible masse moléculaire, de monoamines et/ou monoalcools, seuls ou en mélanges.

7. Compositions de peintures en poudre polyuréthane selon la revendication 6,
**caractérisées en ce que**
des polyesters et/ou des dialcools monomères sont contenus.

8. Compositions de peintures en poudre polyuréthane selon au moins l'une des revendications 1 à 7,
**caractérisées en ce**
**qu'**en tant que polymères B) contenant des groupes hydroxy sont contenus des polyesters, polyéthers, polyacrylates, polyuréthanes et polycarbonates, seuls ou en mélanges.

9. Compositions de peintures en poudre polyuréthane selon la revendication 8,
**caractérisées en ce que**
sont contenus des polyesters ayant un indice de groupes OH de 30 à 150 mg de KOH/g, une masse moléculaire moyenne de 500 à 6 000 g/mole et un point de fusion compris entre 40 et 130 °C.

10. Compositions de peintures en poudre polyuréthane selon au moins l'une des revendications 1 à 9,
**caractérisées en ce**
**que** sont utilisés, sont contenus des catalyseurs (C) choisis parmi le formiate de tétraméthylammonium, l'acétate de tétraméthylammonium, le propionate de tétraméthylammonium, le butyrate de tétraméthyl-ammonium, le benzoate de tétraméthylammonium, le formiate de tétraéthylammonium, l'acétate de tétraéthylammonium, le propionate de tétraéthyl-ammonium, le butyrate de tétraéthylammonium, le benzoate de tétraéthylammonium, le formiate de tétrapropylammonium, l'acétate de tétrapropylammonium, le propionate de tétrapropylammonium, le butyrate de tétrapropylammonium, le benzoate de tétrapropyl-ammonium, le formiate de tétrabutylammonium, l'acétate de tétrabutylammonium, le propionate de tétrabutylammonium, le butyrate de tétrabutylammonium, le benzoate de tétrabutylammonium, seuls ou en mélanges.

11. Compositions de peintures en poudre polyuréthane selon au moins l'une des revendications 1 à 10,
**caractérisées en ce**
**qu'**en tant que composant D) sont contenus des composés époxy, des carbodiimides, des hydroxyalkylamides et/ou des 2-oxazolines.

12. Compositions de peintures en poudre polyuréthane selon la revendication 11,
**caractérisées en ce que**
sont contenus du versatate de glycidyle, de l'isocyanurate d'éther triglycidylique, de l'EPIKOTE^{®} 828, du Vestagon EP HA 320, de la phénylène-bisoxazoline, de la 2-méthyl-2-oxazoline-2-hydroxy-éthyl-2-oxazoline, de la 2-hydroxypropyl-2-oxazoline et/ou de la 5-hydroxypentyl-2-oxazoline, seul(e)s ou en mélanges.

13. Compositions de peintures en poudre polyuréthane selon au moins l'une des revendications 1 à 12,
**caractérisées en ce**
**qu'**en tant qu'adjuvants et additifs E) sont contenus des agents d'étalement, des photoprotecteurs, une charge, des catalyseurs supplémentaires et/ou des pigments.

14. Procédé pour la préparation de compositions de peinture en poudre polyuréthane hautement réactives, contenant
A) au moins un durcisseur de peinture en poudre, contenant des groupes urétdione, à base de polyisocyanates aliphatiques, (cyclo)aliphatiques ou cycloaliphatiques et de composés contenant des groupes hydroxy, ayant un point de fusion de 40 à 130 °C, une teneur en groupes NCO libres inférieure à 5 % en poids et une teneur en groupes urétdione de 6 à 18 % en poids,
B) au moins un polymère contenant des groupes hydroxy, ayant un point de fusion de 40 à 130 °C et un indice de groupes OH compris entre 20 et 200 mg de KOH/gramme,
C) au moins un catalyseur de formule [NR¹R²R³R⁴]⁺[R⁵COO]⁻, R¹ à R⁴ représentant, simultanément ou indépendamment les uns des autres, des radicaux alkyle, aryle, aralkyle, hétéroaryle, alcoxyalkyle ayant de 1 à 18 atomes de carbone, chacun linéaire ou ramifié, non ponté ou ponté par d'autres radicaux R¹ à R⁴, avec formation de cycles, bicycles ou tricycles et les atomes qui forment un pont pouvant être, outre des atomes de carbone, également des hétéroatomes et chaque radical R¹ à R⁴ pouvant en outre comporter encore un ou plusieurs groupes alcool, amino, ester, céto, thio, uréthane, urée, allophanate, une ou plusieurs doubles liaisons, triples liaisons ou un ou plusieurs atomes d'halogène, et R⁵ représentant un radical alkyle, aryle, aralkyle, hétéroaryle, alcoxyalkyle, linéaire ou ramifié, ayant de 1 à 18 atomes de carbone et pouvant en outre comporter encore un ou plusieurs groupes alcool, amino, ester, céto, thio, uréthane, urée, allophanate, une ou plusieurs doubles liaisons, triples liaisons ou un ou plusieurs atomes d'halogène,
D) éventuellement au moins un composé réactif vis-à-vis de groupes acides, en une proportion pondérale, par rapport à la composition totale, de 0,1 à 10 %,
de sorte que les deux composants A) et B) sont présents en le rapport tel qu'à chaque groupe hydroxy du composant B) correspond 0,3 à 1 groupe urétdione du composant A), et la proportion du catalyseur en C) vaut de 0,001 à 3 % en poids de la quantité totale des composants A) et B), dans des appareils pouvant être chauffés, à une limite supérieure de température de 120 à 130 °C.

15. Utilisation de
A) au moins un durcisseur de peinture en poudre, contenant des groupes urétdione, à base de polyisocyanates aliphatiques, (cyclo)aliphatiques ou cycloaliphatiques et de composés contenant des groupes hydroxy, ayant un point de fusion de 40 à 130 °C, une teneur en groupes NCO libres inférieure à 5 % en poids et une teneur en groupes urétdione de 6 à 18 % en poids,
B) au moins un polymère contenant des groupes hydroxy, ayant un point de fusion de 40 à 130 °C et un indice de groupes OH compris entre 20 et 200 mg de KOH/gramme,
C) au moins un catalyseur de formule [NR¹R²R³R⁴]⁺[R⁵COO]⁻, R¹ à R⁴ représentant, simultanément ou indépendamment les uns des autres, des radicaux alkyle, aryle, aralkyle, hétéroaryle, alcoxyalkyle ayant de 1 à 18 atomes de carbone, chacun linéaire ou ramifié, non ponté ou ponté par d'autres radicaux R¹ à R⁴, avec formation de cycles, bicycles ou tricycles et les atomes qui forment un pont pouvant être, outre des atomes de carbone, également des hétéroatomes et chaque radical R¹ à R⁴ pouvant en outre comporter encore un ou plusieurs groupes alcool, amino, ester, céto, thio, uréthane, urée, allophanate, une ou plusieurs doubles liaisons, triples liaisons ou un ou plusieurs atomes d'halogène, et R⁵ représentant un radical alkyle, aryle, aralkyle, hétéroaryle, alcoxyalkyle, linéaire ou ramifié, ayant de 1 à 18 atomes de carbone et pouvant en outre comporter encore un ou plusieurs groupes alcool, amino, ester, céto, thio, uréthane, urée, allophanate, une ou plusieurs doubles liaisons, triples liaisons ou un ou plusieurs atomes d'halogène,
D) éventuellement au moins un composé réactif vis-à-vis de groupes acides, en une proportion pondérale, par rapport à la composition totale, de 0,1 à 10 %,
de sorte que les deux composants A) et B) sont présents en le rapport tel qu'à chaque groupe hydroxy du composant B) correspond 0,3 à 1 groupe urétdione du composant A), et la proportion du catalyseur en C) vaut de 0,001 à 3 % en poids de la quantité totale des composants A) et B), pour la production de revêtements de peinture en poudre.

16. Utilisation selon la revendication 15,
**caractérisée en ce que**
sont contenus des composés de départ selon au moins l'une des revendications 2 à 13.

17. Utilisation selon les revendications 15 et 16, pour la production de revêtements de peinture en poudre sur des subjectiles en métal, matière plastique, bois, verre, cuir ou autres, résistants à la chaleur.

18. Compositions de revêtement de métal, contenant une composition de peinture en poudre polyuréthane à base de
A) au moins un durcisseur de peinture en poudre, contenant des groupes urétdione, à base de polyisocyanates aliphatiques, (cyclo)aliphatiques ou cycloaliphatiques et de composés contenant des groupes hydroxy, ayant un point de fusion de 40 à 130 °C, une teneur en groupes NCO libres inférieure à 5 % en poids et une teneur en groupes urétdione de 6 à 18 % en poids,
B) au moins un polymère contenant des groupes hydroxy, ayant un point de fusion de 40 à 130 °C et un indice de groupes OH compris entre 20 et 200 mg de KOH/gramme,
C) au moins un catalyseur de formule [NR¹R²R³R⁴]⁺ [R⁵COO]⁻, R¹ à R⁴ représentant, simultanément ou indépendamment les uns des autres, des radicaux alkyle, aryle, aralkyle, hétéroaryle, alcoxyalkyle ayant de 1 à 18 atomes de carbone, chacun linéaire ou ramifié, non ponté ou ponté par d'autres radicaux R¹ à R⁴, avec formation de cycles, bicycles ou tricycles et les atomes qui forment un pont pouvant être, outre des atomes de carbone, également des hétéroatomes et chaque radical R¹ à R⁴ pouvant en outre comporter encore un ou plusieurs groupes alcool, amino, ester, céto, thio, uréthane, urée, allophanate, une ou plusieurs doubles liaisons, triples liaisons ou un ou plusieurs atomes d'halogène, et R⁵ représentant un radical alkyle, aryle, aralkyle, hétéroaryle, alcoxyalkyle, linéaire ou ramifié, ayant de 1 à 18 atomes de carbone et pouvant en outre comporter encore un ou plusieurs groupes alcool, amino, ester, céto, thio, uréthane, urée, allophanate, une ou plusieurs doubles liaisons, triples liaisons ou un ou plusieurs atomes d'halogène,
D) éventuellement au moins un composé réactif vis-à-vis de groupes acides, en une proportion pondérale, par rapport à la composition totale, de 0,1 à 10 %,
de sorte que les deux composants A) et B) sont présents en le rapport tel qu'à chaque groupe hydroxy du composant B) correspond 0,3 à 1 groupe urétdione du composant A), et la proportion du catalyseur en C) vaut de 0,001 à 3 % en poids de la quantité totale des composants A) et B).

19. Composition de revêtement de bois, contenant une composition de peinture en poudre polyuréthane à base de
A) au moins un durcisseur de peinture en poudre, contenant des groupes urétdione, à base de polyisocyanates aliphatiques, (cyclo)aliphatiques ou cycloaliphatiques et de composés contenant des groupes hydroxy, ayant un point de fusion de 40 à 130 °C, une teneur en groupes NCO libres inférieure à 5 % en poids et une teneur en groupes urétdione de 6 à 18 % en poids,
B) au moins un polymère contenant des groupes hydroxy, ayant un point de fusion de 40 à 130 °C et un indice de groupes OH compris entre 20 et 200 mg de KOH/gramme,
C) au moins un catalyseur de formule [NR¹R²R³R⁴]⁺[R⁵COO]⁻, R¹ à R⁴ représentant, simultanément ou indépendamment les uns des autres, des radicaux alkyle, aryle, aralkyle, hétéroaryle, alcoxyalkyle ayant de 1 à 18 atomes de carbone, chacun linéaire ou ramifié, non ponté ou ponté par d'autres radicaux R¹ à R⁴, avec formation de cycles, bicycles ou tricycles et les atomes qui forment un pont pouvant être, outre des atomes de carbone, également des hétéroatomes et chaque radical R¹ à R⁴ pouvant en outre comporter encore un ou plusieurs groupes alcool, amino, ester, céto, thio, uréthane, urée, allophanate, une ou plusieurs doubles liaisons, triples liaisons ou un ou plusieurs atomes d'halogène, et R⁵ représentant un radical alkyle, aryle, aralkyle, hétéroaryle, alcoxyalkyle, linéaire ou ramifié, ayant de 1 à 18 atomes de carbone et pouvant en outre comporter encore un ou plusieurs groupes alcool, amino, ester, céto, thio, uréthane, urée, allophanate, une ou plusieurs doubles liaisons, triples liaisons ou un ou plusieurs atomes d'halogène,
D) éventuellement au moins un composé réactif vis-à-vis de groupes acides, en une proportion pondérale, par rapport à la composition totale, de 0,1 à 10 %,
de sorte que les deux composants A) et B) sont présents en le rapport tel qu'à chaque groupe hydroxy du composant B) correspond 0,3 à 1 groupe urétdione du composant A), et la proportion du catalyseur en C) vaut de 0,001 à 3 % en poids de la quantité totale des composants A) et B).

20. Compositions de revêtement de cuir, contenant une composition de peinture en poudre polyuréthane à base de
A) au moins un durcisseur de peinture en poudre, contenant des groupes urétdione, à base de polyisocyanates aliphatiques, (cyclo)aliphatiques ou cycloaliphatiques et de composés contenant des groupes hydroxy, ayant un point de fusion de 40 à 130 °C, une teneur en groupes NCO libres inférieure à 5 % en poids et une teneur en groupes urétdione de 6 à 18 % en poids,
B) au moins un polymère contenant des groupes hydroxy, ayant un point de fusion de 40 à 130 °C et un indice de groupes OH compris entre 20 et 200 mg de KOH/gramme,
C) au moins un catalyseur de formule [NR¹R²R³R⁴]⁺[R⁵COO]⁻, R¹ à R⁴ représentant, simultanément ou indépendamment les uns des autres, des radicaux alkyle, aryle, aralkyle, hétéroaryle, alcoxyalkyle ayant de 1 à 18 atomes de carbone, chacun linéaire ou ramifié, non ponté ou ponté par d'autres radicaux R¹ à R⁴, avec formation de cycles, bicycles ou tricycles et les atomes qui forment un pont pouvant être, outre des atomes de carbone, également des hétéroatomes et chaque radical R¹ à R⁴ pouvant en outre comporter encore un ou plusieurs groupes alcool, amino, ester, céto, thio, uréthane, urée, allophanate, une ou plusieurs doubles liaisons, triples liaisons ou un ou plusieurs atomes d'halogène, et R⁵ représentant un radical alkyle, aryle, aralkyle, hétéroaryle, alcoxyalkyle, linéaire ou ramifié, ayant de 1 à 18 atomes de carbone et pouvant en outre comporter encore un ou plusieurs groupes alcool, amino, ester, céto, thio, uréthane, urée, allophanate, une ou plusieurs doubles liaisons, triples liaisons ou un ou plusieurs atomes d'halogène,
D) éventuellement au moins un composé réactif vis-à-vis de groupes acides, en une proportion pondérale, par rapport à la composition totale, de 0,1 à 10 %,
de sorte que les deux composants A) et B) sont présents en le rapport tel qu'à chaque groupe hydroxy du composant B) correspond 0,3 à 1 groupe urétdione du composant A), et la proportion du catalyseur en C) vaut de 0,001 à 3 % en poids de la quantité totale des composants A) et B).

21. Compositions de revêtement de matière plastique, contenant une composition de peinture en poudre polyuréthane à base de
A) au moins un durcisseur de peinture en poudre, contenant des groupes urétdione, à base de polyisocyanates aliphatiques, (cyclo)aliphatiques ou cycloaliphatiques et de composés contenant des groupes hydroxy, ayant un point de fusion de 40 à 130 °C, une teneur en groupes NCO libres inférieure à 5 % en poids et une teneur en groupes urétdione de 6 à 18 % en poids,
B) au moins un polymère contenant des groupes hydroxy, ayant un point de fusion de 40 à 130 °C et un indice de groupes OH compris entre 20 et 200 mg de KOH/gramme,
C) au moins un catalyseur de formule [NR¹R²R³R⁴]⁺[R⁵COO]⁻, R¹ à R⁴ représentant, simultanément ou indépendamment les uns des autres, des radicaux alkyle, aryle, aralkyle, hétéroaryle, alcoxyalkyle ayant de 1 à 18 atomes de carbone, chacun linéaire ou ramifié, non ponté ou ponté par d'autres radicaux R¹ à R⁴, avec formation de cycles, bicycles ou tricycles et les atomes qui forment un pont pouvant être, outre des atomes de carbone, également des hétéroatomes et chaque radical R¹ à R⁴ pouvant en outre comporter encore un ou plusieurs groupes alcool, amino, ester, céto, thio, uréthane, urée, allophanate, une ou plusieurs doubles liaisons, triples liaisons ou un ou plusieurs atomes d'halogène, et R⁵ représentant un radical alkyle, aryle, aralkyle, hétéroaryle, alcoxyalkyle, linéaire ou ramifié, ayant de 1 à 18 atomes de carbone et pouvant en outre comporter encore un ou plusieurs groupes alcool, amino, ester, céto, thio, uréthane, urée, allophanate, une ou plusieurs doubles liaisons, triples liaisons ou un ou plusieurs atomes d'halogène,
D) éventuellement au moins un composé réactif vis-à-vis de groupes acides, en une proportion pondérale, par rapport à la composition totale, de 0,1 à 10 %,
de sorte que les deux composants A) et B) sont présents en le rapport tel qu'à chaque groupe hydroxy du composant B) correspond 0,3 à 1 groupe urétdione du composant A), et la proportion du catalyseur en C) vaut de 0,001 à 3 % en poids de la quantité totale des composants A) et B).

22. Revêtement de métal selon la revendication 18, pour carrosseries d'automobiles, motocyclettes et bicyclettes, parties de bâtiments et appareils ménagers.

23. Compositions de revêtement selon l'une quelconque des revendications 18 à 22,
**caractérisées en ce que**
sont contenus des adjuvants et additifs E).

24. Compositions de revêtement selon l'une quelconque des revendications 18 à 23,
**caractérisées en ce**
**qu'**elles contiennent des composés selon au moins l'une des revendications 2 à 14.
